# EUROPÄISCHE PATENTSCHRIFT

(11) **EP 3 910 216 B1**
(45) Veröffentlichungstag und Bekanntmachung des Hinweises auf die Patenterteilung: **26.07.2023**
(21) Anmeldenummer: 21170717.9
(22) Anmeldetag: 27.04.2021
(51) Int. Cl.: F16J 15/32, F16J 15/3204, F16J 15/3236, F16J 15/3276, F16J 15/56, F16J 15/3224

(54) **DICHTRING UND DICHTUNGSANORDNUNG, DIE DEN DICHTRING UMFASST**
SEAL RING AND SEAL ASSEMBLY COMPRISING THE SEAL RING
BAGUE D'ÉTANCHÉITÉ ET AGENCEMENT D'ÉTANCHÉITÉ COMPRENANT LA BAGUE D'ÉTANCHÉITÉ

(30) Priorität: 14.05.2020 DE 102020113090
(43) Veröffentlichungstag der Anmeldung: 17.11.2021
(73) Patentinhaber: Carl Freudenberg KG, 69469 Weinheim (DE)
(72) Erfinder: Vöhringer, Dr. Marc-Christian, 79725 Laufenburg (DE)

(56) Entgegenhaltungen:
- EP-A1- 1 795 786
- DE-A1-102014 014 033
- US-A1- 2014 265 144
- US-B1- 6 523 833

## Beschreibung

### Technisches Gebiet

Die Erfindung betrifft einen Dichtring und eine Dichtungsanordnung, die den Dichtring umfasst. Der Dichtring besteht aus einem elastomeren Dichtungswerkstoff, der, im Querschnitt betrachtet, im wesentlichen T-förmig ausgebildet ist und ein sich in axialer Richtung erstreckendes Stützteil und eine sich in radialer Richtung erstreckende und elastisch nachgiebige Dichtlippe umfasst, wobei die Dichtlippe eine Basis aufweist, die in das Stützteil übergehend ausgebildet ist, wobei das Stützteil auf der der Dichtlippe radial abgewandten Seite einen ersten Krümmungsradius aufweist und auf der der Dichtlippe radial zugewandten Seite, axial beiderseits der Dichtlippe, einen zweiten und dritten Krümmungsradius, wobei in axialer Richtung mittig des Dichtrings eine gedachte Radialebene angeordnet ist und wobei der Dichtring symmetrisch zur Radialebene ausgebildet ist.

### Stand der Technik

Ein solcher Dichtring und eine Dichtungsanordnung, die einen solchen Dichtring umfasst, sind aus der DE 10 2014 014 033 A1 bekannt.

Der Dichtring umfasst ein in radialer Richtung relativ dick ausgebildetes Stützteil, aus dem sich eine in radialer Richtung relativ flach ausgebildete Dichtlippe in radialer Richtung erstreckt. Dadurch ist die Flexibilität der Dichtlippe eingeschränkt. Das Stützteil und die Dichtlippe sind einstückig ineinander übergehend und materialeinheitlich ausgebildet und bestehen aus einem elastomeren Dichtungswerkstoff.

Herstellungsbedingt geht der Krümmungsradius in axialer Richtung stirnseitig beiderseits jeweils in einen gerundet ausgebildeten Stützbereich über.

Ein weiterer Dichtring und eine Dichtungsanordnung, in der der Dichtring zur Anwendung gelangt, sind aus der US 6,523,833 B1 bekannt. Der Dichtring besteht aus einem Dichtungswerkstoff und ist, im Querschnitt betrachtet, im Wesentlichen T-förmig ausgebildet. Er umfasst ein sich in axialer Richtung erstreckendes Stützteil und eine sich in radialer Richtung erstreckende und elastisch nachgiebige Dichtlippe, wobei die Dichtlippe eine Basis aufweist, die in das Stützteil übergehend ausgebildet ist. Das Stützteil umfasst gerundet ausgebildete Stützbereiche, die von den Stirnseiten des Dichtrings axial nach innen versetzt sind. Der Dichtring ist in einer im Querschnitt betrachtet schwalbenschwanzförmigen Einbaunut einer Dichtungsanordnung eingebaut, wird bei Verlagerungen der gegeneinander abzudichtenden Maschinenelemente in radialer Richtung in der Einbaunut verpresst und legt sich mit elastischer Vorspannung dichtend an die Wandungen der schwalbenschwanzförmig ausgebildeten Einbaunut an.

Ein anderer Dichtring mit einem sich in axialer Richtung erstreckenden Stützteil und einer sich in radialer Richtung erstreckenden und elastisch nachgiebigen Dichtlippe ist aus der EP 2 634 458 B1 bekannt. Die Dichtlippe weist eine Basis auf, die in das Stützteil übergehend ausgebildet ist. Die Dichtlippe und das Stützteil sind jeweils asymmetrisch zu einer gedachten Radialebene angeordnet, die den Dichtring axial mittig durchschneidet.

Außerdem ist eine davon abweichende Ausgestaltung eines Dichtrings offenbart. Dieser Dichtring weist ein Stützteil auf, das auf der der Dichtlippe radial abgewandten Seite gerundet ausgebildete Stützflächen aufweist.

Ein weiterer Dichtring ist allgemein bekannt und beispielsweise als O-Ring ausgebildet. Ein O-Ring hat einen kreisrunden Querschnitt und ist um seine axiale Mittelachse rotationssymmetrisch ausgebildet. O-Ringe gelangen zumeist zur gegenseitigen statischen Abdichtung zweier Maschinenelemente zur Anwendung und dichten im Wesentlichen in radialer Richtung ab. Ein erstes abzudichtendes Maschinenelement weist einen Einbauraum für den O-Ring auf, wobei der O-Ring den Einbauraum radial in Richtung eines zweiten abzudichtenden Maschinenelements überragt und an diesem unter radialer elastischer Vorspannung dichtend anliegt.

Eines der gegeneinander abzudichtenden Maschinenelemente kann als eine Stange, das andere abzudichtende Maschinenelement als ein die Stange umschließendes Gehäuse ausgebildet sein.

Während seiner bestimmungsgemäßen Verwendung ist ein O-Ring in seinem Einbauraum im Mittel um etwa 20 % verpresst, um eine zuverlässige statische Abdichtung zu gewährleisten. Die Verpressung des O-Rings erfolgt zumeist über Einführschrägen an den Maschinenelementen beim Montieren der Dichtungsanordnung. Die Einführschrägen verhindert eine Beschädigung des O-Rings bei der Montage der Dichtungsanordnung. Dennoch benötigt die Verpressung des O-Rings aufgrund der fast annähernden Innkompressibilität und der schlechten Reibeigenschaften des Elastomers eine relativ hohe Montagekraft, selbst dann, wenn die Reibeigenschaften des O-Rings beispielsweise durch eine Beschichtung seiner Oberfläche oder eines Montagefetts verbessert werden.

Außerdem haben Einführschrägen fertigungstechnische und wirtschaftliche Nachteile, weil sie durch einen Mehraufwand hergestellt werden müssen. Darüber hinaus ist von Nachteil, dass Einführschrägen zusätzlichen axialen Bauraum benötigen, der insbesondere bei in axialer Richtung kompakt bauenden Anwendungen oftmals nicht vorhanden ist. Für solche Anwendungen müssten die Einführschrägen verkleinert oder weggelassen werden, was eine prozesssichere Montage des Dichtrings ohne Beschädigungen erschwert.

Ein weiterer Nachteil von O-Ringen ist darin zu sehen, dass nur vergleichsweise geringe Exzentrizitäten der gegeneinander abzudichtenden Maschinenelemente ausgeglichen werden können. Der Fertigungsprozess von gegeneinander abzudichtenden Maschinenelementen mit nur geringen Fertigungstoleranzen ist konstruktiv aufwendig und teuer, wenn O-Ringe zur statischen Abdichtung der Maschinenelemente zur Anwendung gelangen sollen.

Größere zulässige Exzentrizitäten der Maschinenelemente relativ zueinander, die zu einer Reduzierung der Herstellungskosten der Dichtungsanordnung führen würden, können durch O-Ringe jedoch nicht zuverlässig abgedichtet werden.

### Darstellung der Erfindung

Der Erfindung liegt die Aufgabe zu Grunde, einen Dichtring der eingangs genannten Art derart weiterzuentwickeln, dass dieser mit einer geringen Montagekraft prozesssicher und ohne Beschädigung in eine Dichtungsanordnung montiert werden kann, bei der die gegeneinander abzudichtenden Maschinenelemente keine Einführschrägen und/oder große Exzentrizitäten relativ zueinander aufweisen. Außerdem soll die Gefahr einer Verkantung/ Verkippung des Dichtrings in seinem Einbauraum reduziert sein.

Diese Aufgabe wird erfindungsgemäß mit einem Dichtring gemäß Anspruch 1 und durch eine Dichtungsanordnung gemäß Ansprüchen 13 und 14 gelöst. Auf eine vorteilhafte Ausgestaltung des Dichtrings nehmen die auf Anspruch 1 direkt oder indirekt rückbezogenen Ansprüche, auf eine vorteilhafte Ausgestaltung der Dichtungsanordnung Anspruch 15 Bezug.

Zur Lösung der Aufgabe ist es vorgesehen, dass das Stützteil auf der der Dichtlippe radial abgewandten Seite einen ersten Krümmungsradius aufweist und auf der der Dichtlippe radial zugewandten Seite, axial beiderseits der Dichtlippe, einen zweiten und dritten Krümmungsradius, dass der erste Krümmungsradius in axialer Richtung stirnseitig beiderseits jeweils in eine sich in axialer Richtung erstreckende und ebene Stützfläche übergehend ausgebildet ist, dass in axialer Richtung mittig des Dichtrings eine gedachte Radialebene angeordnet ist und dass der Dichtring symmetrisch zur Radialebene ausgebildet ist.

Erfindungswesentlich ist die sich in radialer Richtung erstreckende Dichtlippe, die mit ihrer Basis in das Stützteil übergehend ausgebildet ist. Im Gegensatz zu den eingangs genannten O-Ringen, die zwischen den gegeneinander abzudichtenden Maschinenelementen verpresst sind, schmiegt sich die flexibel am Stützteil angelenkte Dichtlippe an der abzudichtenden Oberfläche des der Dichtlippe zugewandten Maschinenelementes federnd an. Durch die Flexibilität der Dichtlippe und das Anschmiegen an der abzudichtenden Fläche können auch, bezogen auf O-Ringe, größere Exzentrizitäten der gegeneinander abzudichtenden Maschinenelemente ausgeglichen werden. Die Montagekraft des erfindungsgemäßen Dichtrings steigt nicht so hoch an, wie bei O-Ringen, wenn der Dichtring bei größeren Exzentrizitäten montiert wird. Die Fertigungstoleranzen der Maschinenelemente können größer, die Herstellung deshalb kostengünstiger sein. Durch das Stützteil wird die Dichtlippe in ihrer Lage stabilisiert. Ein Verkippen des Dichtrings in seinem Einbauraum wird durch das Stützteil verhindert.

Bevorzugt ist der Dichtring rotationssymmetrisch ausgebildet.

Das bogenförmige Stützteil weist auf der der Dichtlippe radial abgewandten Seite einen ersten Krümmungsradius auf und auf der der Dichtlippe radial zugewandten Seite, axial beiderseits der Dichtlippe, einen zweiten und dritten Krümmungsradius. Für eine gleichmäßige flexible Verformung des Stützteils axial beiderseits der Dichtlippe ist von Vorteil, wenn diese Bereiche im Wesentlichen gleich ausgebildet sind. Einer Verkantung des Dichtrings im Einbauraum wird dadurch in Verbindung mit der bogenförmigen Vorwölbung des Stützteils wirkungsvoll verringert.

Je stärker der Dichtring in radialer Richtung verpresst wird und somit die bogenförmige Kontur des Stützteils zunehmend aufgehoben wird, desto größer wird die axiale Abstütz-Auflagefläche, und der Dichtring wird somit automatisch bei höherer radialer Verpressung kippstabiler.

Der erste Krümmungsradius ist in axialer Richtung stirnseitig beiderseits jeweils in eine sich in axialer Richtung erstreckende und eben Stützfläche übergehend ausgebildet. Durch die sich in axialer Richtung erstreckende und ebene Stützfläche wird die Kippneigung des Dichtrings in seinem Einbauraum während der Montage und während der bestimmungsgemäßen Verwendung des Dichtrings weiter reduziert.

In axialer Richtung mittig des Dichtrings ist eine gedachte Radialebene angeordnet, wobei der Dichtring symmetrisch zur Radialebene ausgebildet ist. Ein solcher Dichtring ist einfach herstellbar, und bei seiner Montage spielt es durch die Symmetrie keine Rolle, in welcher Richtung er eingebaut wird; die Gefahr von Montagefehlern ist somit auf ein Minimum reduziert.

Nach einer vorteilhaften Ausgestaltung können das Stützteil und die Dichtlippe einstückig ineinander übergehend und materialeinheitlich ausgebildet sein. Durch eine solche Ausgestaltung ist der Dichtring einfach und kostengünstig herstellbar sowie - im Anschluss an seine Verwendung - einfach, weil sortenrein recyclebar.

Das Stützteil kann in axialer Richtung beiderseits jeweils eine Stirnseite aufweisen und von einer zur anderen Stirnseite bogenförmig und radial in Richtung der Dichtlippe vorgewölbt ausgebildet sein. Durch die bogenförmige Ausgestaltung des Stützteils weist dieses Federeigenschaften, ähnlich den Federeigenschaften einer Tellerfeder auf. Über den Federweg des Stützteils in radialer Richtung ist die Federkraft und dadurch die radiale Anpresssung der Dichtlippe an der abzudichtenden Oberfläche des der Dichtlippe zugewandten Maschinenelements zwar abhängig von den Exzentrizitäten der gegeneinander abzudichtenden Maschinenelementen, aber trotzdem weitgehend konstant. Auch bei Abdichtung unterschiedlich großer Drücke und gelenkähnlicher Bewegungen der Dichtlippe um ihre Basis am Stützteil, liegt die Dichtlippe mit stets ausreichender Vorspannung an der abzudichtenden Oberfläche des entsprechenden Maschinenelements an. Die bogenförmige Vorwölbung des Stützteils bleibt während der bestimmungsgemäßen Verwendung des Dichtrings zum Ausgleich üblicher Exzentrizitäten der gegeneinander abzudichtenden Maschinenelemente meist erhalten. Nur zum Ausgleich ungewöhnlich hoher Exzentrizität wird das Stützteil flach an den Nutgrund der Einbaunut des Dichtrings gedrückt. Mit geringem Kraftaufwand können Exzentrizitäten der gegeneinander abzudichtenden Maschinenelemente gut ausgeglichen werden.

Außerdem besteht die Möglichkeit, die radiale Höhe der Dichtlippe durch die Größe der radialen Vorwölbung zur beeinflussen. Je kürzer die Dichtlippe in radialer Richtung ist, desto höher kann der Druck des abzudichtenden Mediums sein.

Gemäß einer vorteilhaften Ausgestaltung kann es vorgesehen sein, dass alle Krümmungsradien im herstellungsbedingten Zustand des Dichtrings einen gleichen Mittelpunkt aufweisen und/oder im Wesentlichen gleich sind. Durch die gleichen Krümmungsradien ist die Dicke des Stützteils entlang seiner axialen Erstreckung im Wesentlichen konstant. Die Herstellung ist dadurch besonders prozesssicher möglich. Unerwünschte Materialanhäufungen im Stützteil, die zu Fehlstellen im Stützteil mit nachteiligen Gebrauchseigenschaften führen könnten, werden dadurch verhindert.

In Abhängigkeit von den jeweiligen Gegebenheiten des Anwendungsfalles können die Krümmungsradien voneinander abweichend sein und/oder sie brauchen nicht denselben Mittelpunkt zu haben. Dadurch besteht beispielsweise die Möglichkeit, dass der erste Krümmungsradius kleiner, der zweite und der dritte Krümmungsradius gleich und, bezogen auf den ersten Krümmungsradius, größer sind. Dadurch weist der Dichtring einen vergleichsweise großen Federweg in radialer Richtung auf, bezogen auf kompakte Abmessungen in axialer Richtung.

Der zweite und der dritte Krümmungsradius können gemeinsam einen gleichmäßig ineinander übergehenden äußeren Krümmungsradius bilden.

Die Stützflächen können gerundet in die entsprechenden Stirnseiten übergehend ausgebildet sein. Eine solche Ausgestaltung ist einfach herstellbar, und die Stirnseiten legen sich bedarfsweise eben an die in axialer Richtung jeweils angrenzenden Begrenzungswandungen einer Einbaunut an.

Die Dichtlippe kann auf der dem Stützteil radial abgewandten Seite eine im Wesentlichen halbkreisförmig ausgebildete Begrenzung aufweisen. Durch die halbkreisförmig ausgebildete Begrenzung ist von Vorteil, dass diese weitgehend unabhängig von einer möglichen Verkippung des Dichtrings/ Verformung der Dichtlippe immer mit einer ähnlich großen Kontaktfläche an der in radialer Richtung angrenzenden Dichtfläche des abzudichtenden Maschinenelements anliegt. Außerdem ist von Vorteil, dass durch die halbkreisförmig ausgebildete Begrenzung größere Fügekraftschwankungen bei unterschiedlich großen Exzentrizitäten der gegeneinander abzudichtenden Maschinenelemente vermieden werden.

Die Basis kann axial beiderseits mit einem vierten und einem fünften Krümmungsradius in den zweiten und dritten Krümmungsradius übergehend ausgebildet sein. Bezogen auf den zweiten und dritten Krümmungsradius sind der vierte und fünfte Krümmungsradius wesentlich kleiner. Außerdem sind der vierte und fünfte Krümmungsradius, im herstellungsbedingten Zustand des Dichtrings, bevorzugt gleich. Durch den vergleichsweise kleinen vierten und fünften Krümmungsradius ist die Dichtlippe mit einem nur geringen Kraftaufwand im Bereich ihrer Basis beweglich. Dadurch ist der Dichtring während seiner bestimmungsgemäßen Verwendung auch gut an spezielle Ausgestaltungen von Dichtungsanordnungen, insbesondere an unterschiedliche Exzentrizitäten der gegeneinander abzudichtenden Maschinenelemente, anpassbar.

In der Radialebene betrachtet, kann die Dicke des Stützteils in radialer Richtung im Wesentlichen der Höhe der Dichtlippe in radialer Richtung entsprechen. Generell gilt, je kürzer die flexible Dichtlippe in radialer Richtung ist, desto höher kann der Druck des abzudichtenden Mediums sein. Insbesondere bei der Abdichtung von vergleichsweise geringen Differenzdrücken an der Dichtlippe im Bereich von etwa 1 bar hat sich die zuvor beschriebene Ausgestaltung als vorteilhaft bewehrt, weil durch eine solche Ausgestaltung ein guter Kompromiss zwischen zufriedenstellender Flexibilität der Dichtlippe und ausreichend starkem Anpressdruck an der Dichtfläche des entsprechenden Maschinenelements gewährleistet ist.

Nach einer ersten Ausgestaltung kann das Stützteil in radialer Richtung innen des Dichtrings, die Dichtlippe in radialer Richtung außen des Dichtrings angeordnet sein, wobei der Dichtring dann als Kolbendichtring ausgebildet ist. Nach einer zweiten Ausgestaltung besteht die Möglichkeit, dass der Dichtring als Stangendichtring ausgebildet ist. Dann ist das Stützteil in radialer Richtung außen des Dichtrings, die Dichtlippe in radialer Richtung innen des Dichtrings angeordnet.

In beiden Fällen, als Kolbendichtring oder als Stangendichtring, funktioniert der erfindungsgemäße Dichtring gleichermaßen gut.

Der Dichtring kann eine axiale Schnurdicke und eine radiale Schnurdicke aufweisen, wobei das Verhältnis aus axialer zu radialer Schnurdicke > 1 ist. Weiter bevorzugt beträgt das Verhältnis 1,1 bis 1,3. Die Schnurdicken beziehen sich auf den herstellungsbedingten Zustand des Dichtrings. Durch ein solches Verhältnis ist sichergestellt, dass der Dichtring in axialer Richtung stets eine größere Erstreckung als in radialer Richtung aufweist. Die Gefahr eines Verkippens des Dichtrings bei der Montage und bei Druckbeaufschlagung während seiner bestimmungsgemäßen Verwendung ist dadurch stark reduziert.

Die Dichtlippe erstreckt sich von ihrer Basis bis zur halbkreisförmig ausgebildeten Begrenzung mit Begrenzungsflächen, die sich im Wesentlichen in radialer Richtung erstrecken.

Die Erstreckung der Dichtlippe in axialer Richtung ist geringer als in radialer Richtung. Dadurch weist die Dichtlippe eine hohe Flexibilität und somit eine gute Anpassung an verschiedene Einbausituationen, insbesondere Einbausituationen mit voneinander abweichenden Exzentrizitäten, auf. Außerdem ist bei einer solchen Ausgestaltung von Vorteil, dass der Dichtring durch die vergleichsweise große Flexibilität der relativ zum Stützteil dünneren Dichtlippe bei der Montage oder während der bestimmungsgemäßen Verwendung eine nur geringe Kippneigung hat. Je weniger der Dichtring in der Dichtungsanordnung verkippt, desto besser ist die Dichtfunktion.

Außerdem betrifft die Erfindung eine Dichtungsanordnung, umfassend einen Dichtring, bei dem das Stützteil in radialer Richtung innen des Dichtrings, die Dichtlippe in radialer Richtung außen des Dichtrings angeordnet ist, wobei der Dichtring als Kolbendichtring ausgebildet ist, mit einem herstellungsbedingten Innendurchmesser di und zwei gegeneinander abzudichtende Maschinenelemente, von denen das erste als eine abzudichtende Stange, das zweite als ein die Stange umschließendes Gehäuse ausgebildet ist, wobei das erste Maschinenelement eine radial in Richtung des zweiten Maschinenelements offene Einbaunut für den Dichtring aufweist, mit einem Nutgrund, der einen Durchmesser dN hat und wobei das Verhältnis aus di zu dN 0,85 bis 0,95 beträgt. Der Innendurchmesser des Dichtrings ist bei Nennmaß also um etwa 10 % kleiner als der Nutgrund der Einbaunut. Dadurch besitzt der Dichtring nach seiner Montage in die Einbaunut eine Aufdehnung in radialer Richtung. Durch die Aufdehnung ist die Kippneigung des Dichtrings während seiner bestimmungsgemäßen Verwendung reduziert.

Eine andere Dichtungsanordnung umfasst einen Dichtring, bei dem das Stützteil in radialer Richtung außen des Dichtrings, die Dichtlippe in radialer Richtung innen des Dichtrings angeordnet ist, wobei der Dichtring als Stangendichtung ausgebildet ist, mit einem herstellungsbedingten Außendurchmesser da und zwei gegeneinander abzudichtende Maschinenelemente, von denen das erste als ein Gehäuse, das zweite als eine im Wesentlichen konzentrisch im Gehäuse angeordnete Stange ausgebildet ist, wobei das erste Maschinenelement eine radial in Richtung des zweiten Maschinenelements offene Einbaunut für den Dichtring aufweist, mit einem Nutgrund, der einen Durchmesser dN hat und wobei das Verhältnis aus da zu dN 1,01 bis 1,05 beträgt. Der Dichtring wird bei Nennmaß dadurch etwas gestaucht, um einen ähnlichen Effekt, wie zuvor bei dem Kolbendichtring beschrieben, zu erzielen. Auch durch die Stauchung wird die Kippneigung des Dichtrings reduziert. Die Stauchung des Stangendichtrings ist jedoch geringer als die Aufdehnung des Kolbendichtrings, weil elastomere Werkstoffe, aus denen der Dichtring besteht, annähernd inkompressibel sind.

Die Einbaunuten der zuvor beschriebenen Dichtungsanordnungen sind, im Schnitt betrachtet, bevorzugt im Wesentlichen rechteckförmig ausgebildet. Dadurch sind sie einfach und kostengünstig herstellbar.

### Kurzbeschreibung der Zeichnung

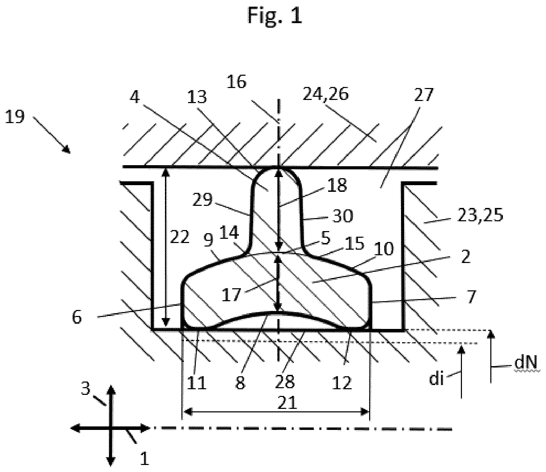

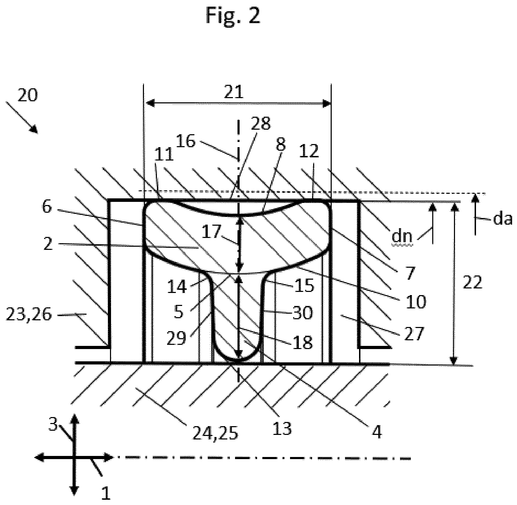

Zwei Ausführungsbeispiele einer erfindungsgemäßen Dichtungsanordnung mit einem erfindungsgemäßen Dichtring werden nachfolgend anhand der schematisch dargestellten Figuren 1 und 2 näher erläutert, wobei der Dichtring in der Dichtungsanordnung gemäß Figur 1 als Kolbendichtring, der Dichtring in der Dichtungsanordnung gemäß Figur 2 als Stangendichtring ausgebildet ist.

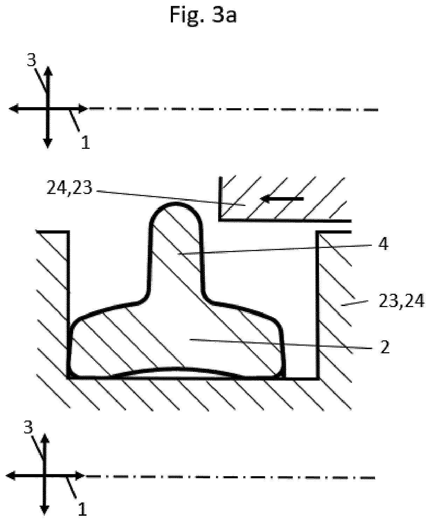

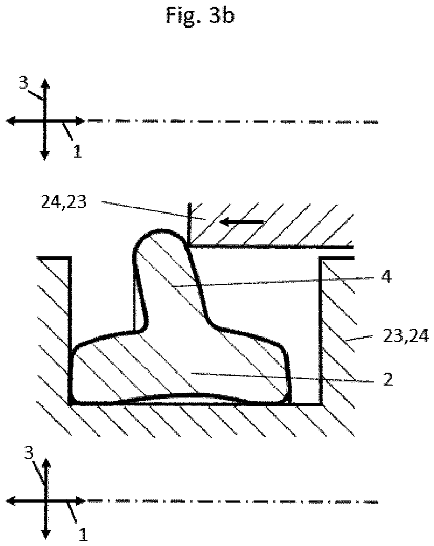

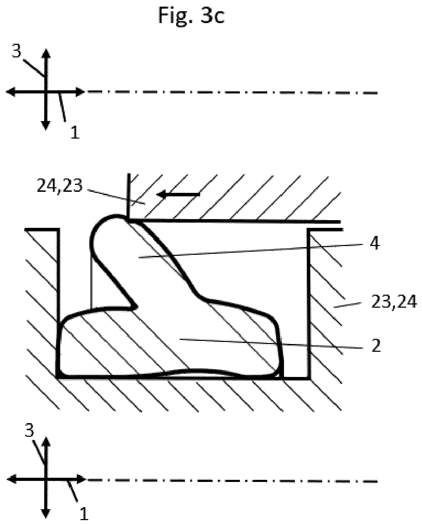

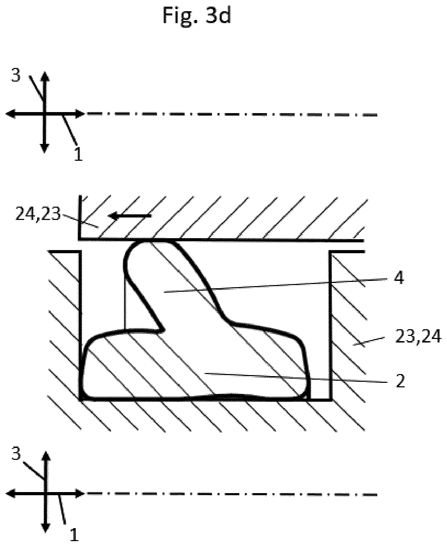

In den schematisch dargestellten Figuren 3a bis 3d ist die Montage einer Dichtungsanordnung exemplarisch gezeigt, wobei der Dichtring als Kolbendichtring oder als Stangendichtring ausgebildet sein kann.

### Ausführung der Erfindung

In den Figuren 1 und 2 ist jeweils eine Dichtungsanordnung dargestellt.

In Figur 1 ist der Dichtring als Kolbendichtring 19, in Figur 2 als Stangendichtring 20 ausgebildet.

In beiden Fällen besteht der Dichtring aus einem elastomeren Dichtungswerkstoff und ist, im hier dargestellten Querschnitt betrachtet, im Wesentlichen T-förmig ausgebildet. Der Dichtring umfasst das Stützteil 2, das sich in axialer Richtung 1 erstreckt und die sich in radialer Richtung 3 erstreckende Dichtlippe 4, wobei das Stützteil 2 und die Dichtlippe 4 einstückig ineinander übergehend und materialeinheitlich ausgebildet sind. Die Dichtlippe 4 geht mit ihrer Basis 5 in das Stützteil 2 über.

Das Stützteil 2 erstreckt sich bogenförmig von einer Stirnseite 6 zur anderen 7 und ist radial in Richtung der Dichtlippe 4 vorgewölbt.

Bei den hier dargestellten Dichtungsanordnungen wirkt kein Differenzdruck auf die Dichtlippen 4.

Das Stützteil 2 hat mehrere Krümmungsradien 8, 9, 10, wobei das Stützteil 2 auf der der Dichtlippe 4 radial abgewandten Seite den ersten Krümmungsradius 8 und auf der der Dichtlippe 4 radial zugewandten Seite, axial beiderseits der Basis 5 der Dichtlippe 4, den zweiten 9 und dritten Krümmungsradius 10 aufweist.

Die axiale Schnurdicke 21 der Dichtringe ist etwas größer als die radiale Schnurdicke 22, wobei das Verhältnis aus axialer 21 zu radialer Schnurdicke 22 in den hier gezeigten Ausführungsbeispielen etwa 1,2 beträgt. Die Schnurdicken 21, 22 beziehen sich jeweils auf den herstellungsbedingten Zustand der Dichtringe.

Um die Kippneigung des Dichtrings während der Montage der Dichtungsanordnung und während seiner bestimmungsgemäßen Verwendung in der Dichtungsanordnung auf ein Minimum zu reduzieren sind die sich in axialer Richtung 1 erstreckenden und ebenden Stützflächen 11, 12 vorgesehen, mit denen sich der Dichtring stabil auf dem Nutgrund 28 der Einbaunut 27 abstützt.

Des Weiteren wird die Kippneigung des Dichtrings durch die Stirnflächen 6, 7 noch weiter verringert, da der Dichtring mit seinen Stirnflächen 6, 7 während seiner Montage bei ausreichenden Reibverhältnissen an die entsprechenden Stirnflächen der Einbaunut verschoben wird. Somit liegen die einander zugewandten Stirnflächen von Stützteil und Einbaunut aufeinander.

Die Dichtlippe 4 ist auf ihrer dem Stützteil 2 radial abgewandten Seite durch eine halbkreisförmig ausgebildete Begrenzung 13 begrenzt, wobei sich die in axialer Richtung angeordneten Begrenzungswände 29, 30 der Dichtlippe 4 im Wesentlichen in radialer Richtung 3 erstrecken. In Abhängigkeit von den jeweiligen Gegebenheiten des Anwendungsfalls und den gewünschten Gebrauchseigenschaften des Dichtrings können die Begrenzungswände 29, 30 einen kleinen Winkel miteinander einschließen, insbesondere kann sich die Dichtlippe 4 radial in Richtung ihrer Begrenzung 13 leicht verjüngen. Der Grad der elastischen Nachgiebigkeit der Dichtlippe entlang ihrer radialen Erstreckung kann dadurch gezielt beeinflusst werden. Der Übergang von den Begrenzungswänden 29, 30 in die Krümmungsradien 9, 10 erfolgt durch den vierten Krümmungsradius 14 und den fünften Krümmungsradius 15, die, bezogen auf die Krümmungsradien 9, 10, wesentlich kleiner sind, so dass die Dichtlippe 4 eine gute Flexibilität aufweist.

In beiden Ausführungsbeispielen ist der Dichtring symmetrisch zu der gedachten Radialebene 16 angeordnet. In der Radialebene 16 ist die Dicke 17 des Stützteils 2 in radialer Richtung 3 ähnlich groß wie die Höhe 18 der Dichtlippe 4 in gleicher Richtung 3.

In Figur 1 ist der Dichtring, wie zuvor beschrieben, als Kolbendichtring 19 ausgebildet. Er hat einen herstellungsbedingten Innendurchmesser di und ist zwischen den beiden gegeneinander abzudichtenden Maschinenelementen 23, 24 angeordnet. Das erste Maschinenelement 23 ist als Stange 25, das zweite Maschinenelement 24 als Gehäuse 26 ausgebildet, das die Stange 25 mit radialem Abstand außenumfangsseitig umschließt, wobei in dem durch den Abstand gebildeten Spalt der Dichtring angeordnet ist. Das erste Maschinenelement 23 weist die radial in Richtung des zweiten Maschinenelements 24 offene Einbaunut 27 für den Dichtring auf. Die Einbaunut 27 ist im gezeigten Schnitt rechteckförmige ausgebildet und hat einen Nutgrund 28 mit einem Durchmesser dN. Das Verhältnis aus dem Innendurchmesser di des Dichtrings 4 zum Durchmesser des Nutgrunds dN beträgt im hier gezeigten Ausführungsbeispiel etwa 0,9. Dadurch ist der Dichtring in radialer Richtung 3 aufgedehnt, und die Kippneigung des Dichtrings in der Einbaunut 27 ist reduziert.

In Figur 2 ist der Dichtring demgegenüber als Stangendichtring 20 ausgebildet. Das Stützteil 2 ist hier in radialer Richtung 3 außen des Dichtrings, die Dichtlippe 4 in radialer Richtung innen des Dichtrings angeordnet. Der Dichtring hat in seinem herstellungsbedingten Zustand einen Außendurchmesser da, der größer ist als der Durchmesser dN des Nutgrunds 28 der Einbaunut 27. Das erste Maschinenelement 23 ist im hier gezeigten Ausführungsbeispiel ein Gehäuse 26, das zweite Maschinenelement 24 eine konzentrisch im Gehäuse 26 angeordnete Stange 25, die vom Gehäuse 26 außenumfangsseitig mit radialem Abstand umschlossen ist. Das erste Maschinenelement 23 weist eine radial in Richtung des zweiten Maschinenelements 24 offene und rechteckförmig ausgebildete Einbaunut 27 für den Dichtring auf. Der Dichtring ist im gezeigten Ausführungsbeispiel um etwa 3 % gestaucht, um eine kippstabile Positionierung des Dichtrings in der Einbaunut 27 zu bewirken.

Auch dann, wenn die beiden gegeneinander abzudichtenden Maschinenelemente 23, 24 mit größeren Exzentrizitäten versetzt zueinander angeordnet sind und/oder keine Einführschrägen aufweisen, um den Dichtring einfacher montieren zu können, ist das Abdichtungsergebnis ausgezeichnet und die Dichtungsanordnung kann mit einer vergleichsweise geringen Fügekraft montiert werden, ohne dass der Dichtring bei der Montage beschädigt würde. Das ist auf die, im Vergleich zu einem O-Ring, gute Flexibilität der Dichtlippe 4 und die gute elastische Nachgiebigkeit des bogenförmig ausgebildeten Stützteils 2 in radialer Richtung 3 zurückzuführen. Das Stützteil 2 kann einen Teil der radialen Verpressung aufnehmen und reduziert somit die Kippneigung der flexiblen Dichtlippe 4.

In den Figuren 3a bis 3d ist die Montage des Dichtrings der Dichtungsanordnung in schematischer Darstellung, beispielhaft anhand einer Kolbendichtung, gezeigt. Der Dichtring ist in einer Einbaunut 27 eines der Maschinenelemente 23, 24 angeordnet, wobei die Dichtlippe 4 radial in Richtung des jeweils anderen Maschinenelements 24, 23 vorsteht. Dieses Maschinenelement 24, 23 ist im gezeigten Ausführungsbeispiel ohne Einführschrägen ausgeführt, so dass es einfach und kostengünstig herstellbar ist.

Bei der Montage des Maschinenelements 24, 23 in axialer Richtung 1 über das Maschinenelement 23, 24 und damit über den in der Einbaunut 27 angeordneten Dichtring, legt sich die Dichtlippe 4 in Montagerichtung des Maschinenelements 24, 23 in axialer Richtung 1, wie in den Figuren 3a bis 3d dargestellt, zunehmend um.

Durch die gute Flexibilität der Dichtlippe 4 im Bereich der Basis 5 und durch die halbkreisförmig ausgebildete Begrenzung 13, in Verbindung mit dem bogenförmigen Stützteil 2, sind die beiden Maschinenelemente 23, 24 durch den Dichtring zuverlässig gegeneinander abgedichtet.

## Patentansprüche

1. Dichtring aus einem elastomeren Dichtungswerkstoff, der, im entspannten Zustand und im Querschnitt betrachtet, im wesentlichen T-förmig ausgebildet ist und ein sich in axialer Richtung (1) erstreckendes Stützteil (2) und eine sich in radialer Richtung (3) erstreckende und elastisch nachgiebige Dichtlippe (4) umfasst, wobei die Dichtlippe (4) eine Basis (5) aufweist, die in das Stützteil (2) übergehend ausgebildet ist, wobei das Stützteil (2) auf der der Dichtlippe (4) radial abgewandten Seite einen ersten Krümmungsradius (8) aufweist und auf der der Dichtlippe (4) radial zugewandten Seite, axial beiderseits der Dichtlippe (4) einen zweiten (9) und dritten Krümmungsradius (10), wobei in axialer Richtung (1) mittig des Dichtrings eine gedachte Radialebene (16) angeordnet ist und wobei der Dichtring symmetrisch zur Radialebene (26) ausgebildet ist, **dadurch gekennzeichnet, dass** der erste Krümmungsradius (8) in axialer Richtung (1) stirnseitig beiderseits jeweils in eine sich axialer Richtung (1) erstreckende und ebene Stützfläche (11, 12) übergehend ausgebildet ist.

2. Dichtring nach Anspruch 1, **dadurch gekennzeichnet, dass** das Stützteil (2) und die Dichtlippe (4) einstückig ineinander übergehend und materialeinheitlich ausgebildet sind.

3. Dichtring nach einem der Ansprüche 1 oder 2, **dadurch gekennzeichnet, dass** das Stützteil (2) in axialer Richtung (1) beiderseits jeweils eine Stirnseite (6, 7) aufweist und dass das Stützteil (2) von einer zu anderen Stirnseite (6, 7) bogenförmig und radial in Richtung der Dichtlippe (4) vorgewölbt ausgebildet ist.

4. Dichtring nach Anspruch 1, **dadurch gekennzeichnet, dass** alle Krümmungsradien (8, 9, 10) im herstellungsbedingten Zustand des Dichtrings einen gleichen Mittelpunkt aufweisen und/oder im Wesentlichen gleich sind.

5. Dichtring nach Anspruch 1, **dadurch gekennzeichnet, dass** die Stützflächen (11, 12) gerundet in die entsprechenden Stirnseiten (6, 7) übergehend ausgebildet sind.

6. Dichtring nach einem der Ansprüche 1 bis 5, **dadurch gekennzeichnet, dass** die Dichtlippe (4) auf der dem Stützteil (2) radial abgewandten Seite eine im Wesentlichen halbkreisförmig ausgebildete Begrenzung (13) aufweist.

7. Dichtring nach einem der Ansprüche 1 bis 6, **dadurch gekennzeichnet, dass** die Basis (5) axial beiderseits mit einem vierten (14) und einem fünften Krümmungsradius (15) in den zweiten (9) und dritten Krümmungsradius (10) übergehend ausgebildet ist.

8. Dichtring nach Anspruch 1, **dadurch gekennzeichnet, dass**, in der Radialebene (16) betrachtet, die Dicke (17) des Stützteils (2) in radialer Richtung (3) im Wesentlichen der Höhe (18) der Dichtlippe (4) in radialer Richtung (3) entspricht.

9. Dichtring nach einem der Ansprüche 1 bis 8, **dadurch gekennzeichnet, dass** das Stützteil (2) in radialer Richtung (3) innen des Dichtrings, die Dichtlippe (4) in radialer Richtung (3) außen des Dichtrings angeordnet ist und dass der Dichtring als Kolbendichtring (19) ausgebildet ist.

10. Dichtring nach einem der Ansprüche 1 bis 8, **dadurch gekennzeichnet, dass** das Stützteil (2) in radialer Richtung (3) außen des Dichtrings, die Dichtlippe (4) in radialer Richtung (3) innen des Dichtrings angeordnet ist und dass der Dichtring als Stangendichtring (20) ausgebildet ist.

11. Dichtring nach einem der Ansprüche 1 bis 10, **dadurch gekennzeichnet, dass** dieser eine axiale Schnurdicke (21) und eine radiale Schnurdicke (22) aufweist und dass das Verhältnis aus axialer (21) zu radialer Schnurdicke (22) > 1 ist.

12. Dichtring nach Anspruch 11, **dadurch gekennzeichnet, dass** das Verhältnis 1,1 bis 1,3 beträgt.

13. Dichtungsanordnung, umfassend einen Dichtring nach Anspruch 9, mit einem herstellungsbedingten Innendurchmesser di und zwei gegeneinander abzudichtende Maschinenelemente (23, 24), von denen das erste (23) als eine abzudichtende Stange (25), das zweite (24) als ein die Stange (25) umschließendes Gehäuse (26) ausgebildet ist, dass das erste Maschinenelement (23) eine radial in Richtung des zweiten Maschinenelements (24) offene Einbaunut (27) für den Dichtring aufweist, mit einem Nutgrund (28), der einen Durchmesser dN hat und dass das Verhältnis aus di zu dN 0,85 bis 0,95 beträgt.

14. Dichtungsanordnung, umfassend einen Dichtring nach Anspruch 10, mit einem herstellungsbedingten Außendurchmesser da und zwei gegeneinander abzudichtende Maschinenelemente (23, 24), von denen das erste (23) als ein Gehäuse (26), das zweite (24) als eine im Wesentlichen konzentrisch im Gehäuse (26) angeordnete Stange (25) ausgebildet ist, dass das erste Maschinenelement (23) eine radial in Richtung des zweiten Maschinenelements (24) offene Einbaunut (27) für den Dichtring aufweist, mit einem Nutgrund (28), der einen Durchmesser dN hat und dass das Verhältnis aus da zu dN 1,01 bis 1,05 beträgt.

15. Dichtungsanordnung nach einem der Ansprüche 13 oder 14, **dadurch gekennzeichnet, dass** die Einbaunut (27), im Schnitt betrachtet, im Wesentlichen rechteckförmig ausgebildet ist.

## Claims

1. Seal ring from an elastomer sealing material which, when viewed in the relaxed state and in cross section, is configured so as to be substantially T-shaped and comprises a support part (2) extending in the axial direction (1), and an elastically resilient seal lip (4) extending in the radial direction (3), wherein the seal lip (4) has a base (5) which is configured so as to transition into the support part (2), wherein the support part (2) on that side that radially faces away from the seal lip (4) has a first curvature radius (8), and on that side that radially faces the seal lip (4), axially on both sides of the seal lip (4), has a second (9) and a third (10) curvature radius, wherein an imaginary radial plane (16) is disposed so as to be centric to the seal ring in the axial direction (1), and wherein the seal ring is configured so as to be symmetrical to the radial plane (26), **characterized in that** the first curvature radius (8) in the axial direction (1) on both end sides is in each case configured so as to transition into a planar support face (11, 12) extending in the axial direction (1).

2. Seal ring according to Claim 1, **characterized in that** the support part (2) and the seal lip (4) are configured in one piece and in a materially integral manner so as to transition into one another.

3. Seal ring according to one of Claims 1 or 2, **characterized in that** the support part (2) in the axial direction (1) on both sides has in each case one end side (6, 7), and **in that** the support part (2) is configured so as to be arcuate from one end side to the other end side (6, 7) and convexly preshaped in the radial direction of the seal lip (4).

4. Seal ring according to Claim 1, **characterized in that** all curvature radii (8, 9, 10) in the production-related state of the seal ring have an identical centre and/or are substantially identical.

5. Seal ring according to Claim 1, **characterized in that** the support faces (11, 12) are configured so as to transition in a radiused manner into the respective end sides (6, 7).

6. Seal ring according to one of Claims 1 to 5, **characterized in that** the seal lip (4) on that side that radially faces away from the support part (2) has a delimitation (13) which is configured so as to be substantially semicircular.

7. Seal ring according to one of Claims 1 to 6, **characterized in that** the base (5) axially on both sides is configured so as to transition by a fourth (14) and a fifth (15) curvature radius into the second (9) and the third (10) curvature radius.

8. Seal ring according to Claim 1, **characterized in that**, when viewed in the radial plane (16), the thickness (17) of the support part (2) in the radial direction (3) corresponds substantially to the height (18) of the seal lip (4) in the radial direction (3).

9. Seal ring according to one of Claims 1 to 8, **characterized in that** the support part (2) in the radial direction (3) is disposed on the inside of the seal ring, the seal lip (4) in the radial direction (3) is disposed on the outside of the seal ring, and **in that** the seal ring is configured as a piston seal ring (19).

10. Seal ring according to one of Claims 1 to 8, **characterized in that** the support part (2) in the radial direction (3) is disposed on the outside of the seal ring, the seal lip (4) in the radial direction (3) is disposed on the inside of the seal ring, and **in that** the seal ring is configured as a rod seal ring (20).

11. Seal ring according to one of Claims 1 to 10, **characterized in that** said seal ring has an axial cord thickness (21) and a radial cord thickness (22), and **in that** the ratio of the axial (21) to radial (22) cord thickness is > 1.

12. Seal ring according to Claim 11, **characterized in that** the ratio is 1.1 to 1.3.

13. Seal assembly comprising a seal ring according to Claim 9, having a production-related internal diameter di and two machine elements (23, 24) that are to be sealed in relation to one another, of which the first (23) is configured as a rod (25) to be sealed, the second (24) is configured as a housing (26) enclosing the rod (25); in that the first machine element (23) has an installation groove (27) for the seal ring that is radially open in the direction of the second machine element (24) and has a groove base (28) which has a diameter dN; and in that the ratio of di to dN is 0.85 to 0.95.

14. Seal assembly comprising a seal ring according to Claim 10, having a production-related external diameter da and two machine elements (23, 24) that are to be sealed in relation to one another, of which the first (23) is configured as a housing (26), the second (24) is configured as a rod (25) disposed so as to be substantially concentric in the housing (26); in that the first machine element (23) has an installation groove (27) for the seal ring that is radially open in the direction of the second machine element (24) and has a groove base (28) which has a diameter dN; and in that the ratio of da to dN is 1.01 to 1.05.

15. Seal assembly according to one of Claims 13 or 14, **characterized in that** the installation groove (27), when viewed in section, is configured so as to be substantially rectangular.

## Revendications

1. Bague d'étanchéité constituée d'une matière d'étanchéité élastomère qui, dans l'état détendu et considérée en section transversale, est réalisée sensiblement en forme de T et comprend une partie de support (2) s'étendant dans la direction axiale (1) et une lèvre d'étanchéité (4) s'étendant dans la direction radiale (3) et souple élastiquement, la lèvre d'étanchéité (4) présentant une base (5) qui est réalisée de manière à se prolonger dans la partie de support (2), la partie de support (2) présentant, sur le côté opposé radialement à la lèvre d'étanchéité (4), un premier rayon de courbure (8) et, sur le côté tourné radialement vers la lèvre d'étanchéité (4), axialement de part et d'autre de la lèvre d'étanchéité (4), un deuxième (9) et un troisième rayon de courbure (10), un plan radial imaginaire (16) étant disposé centralement par rapport à la bague d'étanchéité dans la direction axiale (1) et la bague d'étanchéité étant réalisée symétriquement par rapport au plan radial (26), **caractérisée en ce que** le premier rayon de courbure (8) est réalisé de manière à se prolonger dans la direction axiale (1) du côté frontal de part et d'autre respectivement dans une surface de support (11, 12) plane et s'étendant dans la direction axiale (1).

2. Bague d'étanchéité selon la revendication 1, **caractérisée en ce que** la partie de support (2) et la lèvre d'étanchéité (4) sont réalisées de manière à se prolonger d'une seule pièce l'une dans l'autre et en le même matériau.

3. Bague d'étanchéité selon l'une des revendications 1 ou 2, **caractérisée en ce que** la partie de support (2) présente dans la direction axiale (1) de part et d'autre respectivement un côté frontal (6, 7) et **en ce que** la partie de support (2) est arquée d'un côté frontal à l'autre (6, 7) et est réalisée de manière pré-cintrée et radialement dans la direction de la lèvre d'étanchéité (4) .

4. Bague d'étanchéité selon la revendication 1, **caractérisée en ce que** tous les rayons de courbure (8, 9, 10) présentent, dans l'état dû à la production de la bague d'étanchéité, un même centre et/ou sont sensiblement les mêmes.

5. Bague d'étanchéité selon la revendication 1, **caractérisée en ce que** les surfaces de support (11, 12) sont réalisées de manière à se prolonger de façon arrondie dans les côtés frontaux (6, 7) correspondants.

6. Bague d'étanchéité selon l'une des revendications 1 à 5, **caractérisée en ce que** la lèvre d'étanchéité (4) présente, sur le côté opposé radialement à la partie de support (2), une limite (13) réalisée sensiblement de manière semi-circulaire.

7. Bague d'étanchéité selon l'une des revendications 1 à 6, **caractérisée en ce que** la base (5) est réalisée de manière à se prolonger dans le deuxième (9) et le troisième rayon de courbure (10) axialement de part et d'autre par un quatrième (14) et un cinquième rayon de courbure (15).

8. Bague d'étanchéité selon la revendication 1, **caractérisée en ce que**, considérée dans le plan radial (16), l'épaisseur (17) de la partie de support (2) dans la direction radiale (3) correspond sensiblement à la hauteur (18) de la lèvre d'étanchéité (4) dans la direction radiale (3).

9. Bague d'étanchéité selon l'une des revendications 1 à 8, **caractérisée en ce que** la partie de support (2) est disposée à l'intérieur de la bague d'étanchéité dans la direction radiale (3), la lèvre d'étanchéité (4) est disposée à l'extérieur de la bague d'étanchéité dans la direction radiale (3) et **en ce que** la bague d'étanchéité est réalisée sous forme de bague d'étanchéité de piston (19) .

10. Bague d'étanchéité selon l'une des revendications 1 à 8, **caractérisée en ce que** la partie de support (2) est disposée à l'extérieur de la bague d'étanchéité dans la direction radiale (3), la lèvre d'étanchéité (4) est disposée à l'intérieur de la bague d'étanchéité dans la direction radiale (3) et **en ce que** la bague d'étanchéité est réalisée sous forme de bague d'étanchéité de tige (20) .

11. Bague d'étanchéité selon l'une des revendications 1 à 10, **caractérisée en ce que** celle-ci présente une épaisseur de cordon axiale (21) et une épaisseur de cordon radiale (22) et **en ce que** le rapport de l'épaisseur de cordon axiale (21) à l'épaisseur de cordon radiale (22) est > 1.

12. Bague d'étanchéité selon la revendication 11, **caractérisée en ce que** le rapport est de 1,1 à 1,3.

13. Agencement d'étanchéité, comprenant une bague d'étanchéité selon la revendication 9, présentant un diamètre intérieur di dû à la production et deux éléments de machine (23, 24) devant être rendus étanches l'un par rapport à l'autre, parmi lesquels le premier (23) est réalisé sous la forme d'une tige (25) devant être rendue étanche, le deuxième (24) est réalisé sous la forme d'un logement (26) entourant la tige (25), en ce que le premier élément de machine (23) présente une rainure d'installation (27) pour la bague d'étanchéité qui est ouverte radialement en direction du deuxième élément de machine (24), laquelle rainure présente un fond de rainure (28) qui a un diamètre dN et en ce que le rapport de di à dN est de 0,85 à 0,95.

14. Agencement d'étanchéité, comprenant une bague d'étanchéité selon la revendication 10, présentant un diamètre extérieur da dû à la production et deux éléments de machine (23, 24) devant être rendus étanches l'un par rapport à l'autre, parmi lesquels le premier (23) est réalisé sous la forme d'un logement (26), le deuxième (24) est réalisé sous la forme d'une tige (25) disposée de manière sensiblement concentrique dans le logement (26), en ce que le premier élément de machine (23) présente une rainure d'installation (27) pour la bague d'étanchéité qui est ouverte radialement en direction du deuxième élément de machine (24), laquelle rainure présente un fond de rainure (28) qui a un diamètre dN et en ce que le rapport de da à dN est de 1,01 à 1,05.

15. Agencement d'étanchéité selon l'une des revendications 13 ou 14, **caractérisé en ce que** la rainure d'installation (27), considérée en coupe, est réalisée sensiblement de manière rectangulaire.
